Europäisches Patentamt

(19) European Patent Office                    (11) Publication number: **0 045 214**

Office européen des brevets                                         **B1**

(12)                    EUROPEAN PATENT SPECIFICATION

(45) Date of publication of patent specification: **31.10.84**    (51) Int. Cl.³: **G 09 B 23/04, B 43 L 13/18**

(21) Application number: **81303447.7**

(22) Date of filing: **27.07.81**

(54) **Drawing aid.**

(30) Priority: **29.07.80 GB 8024789**

(43) Date of publication of application:
**03.02.82 Bulletin 82/05**

(45) Publication of the grant of the patent:
**31.10.84 Bulletin 84/44**

(84) Designated Contracting States:
**AT BE CH DE FR IT LI NL SE**

(56) References cited:
**DE-C- 66 541**
**GB-A- 622 490**
**GB-A- 661 328**
**US-A-3 465 453**
**US-A-3 680 227**

(73) Proprietor: **THE OPEN UNIVERSITY**
**P.O. Box 252 Walton Hall Walton**
**Milton Keynes MK7 6BP Buckinghamshire (GB)**

(72) Inventor: **Steadman, John Philip**
**81 High Street**
**Olney Buckinghamshire (GB)**

(74) Representative: **Thomson, Roger Bruce et al**
**POLLAK MERCER & TENCH High Holborn House**
**52-54 High Holborn**
**London WC1V 6RY (GB)**

## Description

This invention relates to a drawing aid which is designed to facilitate the teaching of the principles of geometrical projection in drawing.

The invention is concerned with a drawing aid comprising an elongate support, an object, a projection of which is to be drawn, arranged to be mounted on the support, and a transparent drawing plate, on which a user can draw, which defines a picture plane and is also arranged to be mounted on the support.

In British patent specification GB—A—661328 there is described an apparatus for tracing objects, designs and the like to a reduced or an enlarged scale. The apparatus comprises two parallel frames, with one movable relative to the other, one frame carrying a transparent sheet on which the user can trace an object and the other frame serving as a base which can be placed over an object or which can carry a sheet on which the user can draw. The grames are supported by guide rods which incorporate a head rest and a sight hole for one eye. This known apparatus is extremely limited in terms of what it can do; it is in effect just a scaling instrument with no provision for different types of projection drawing. The only provision for adjustment is the ability to move one frame relative to the other, but even then the frames are maintained parallel.

The present invention is particularly concerned with a drawing aid which, in just the one instrument, enables one to demonstrate the principles of geometrical projection which form the basis of a range of projections, for example perspective, orthographic and oblique projections.

It is an object of the present invention to provide a drawing aid which enables the user to learn the principles of geometrical projection in a simple and clear manner.

It is another object of the invention to provide a drawing aid which is cheap to produce and which, if desired, can be made from materials which enable the drawing aid to be produced in kit form for assembly by the user, thereby reducing the problems of storage and packaging, and also enabling the kit to be sent easily by post.

In accordance with the present invention there is provided a drawing aid comprising an elongate support, an object, a projection of which is to be drawn, arranged to be mounted on the support, a transparent drawing plate, on which a user can draw, which defines a picture plane and is also arranged to be mounted on the support, characterised in that a reflector is provided which is mountable on the support, and in that the support comprises a linear rack provided with a plurality of receiving apertures to receive the object, the drawing plate and the reflector, alternative apertures being provided for at least said object and said drawing plate, and said apertures each being predetermined in respect of their position along the longitudinal axis of the rack and in respect of the orientation relative to said axis which said drawing plate will adopt when mounted in one of its said receiving apertures.

Preferably, the drawing aid is such that one can carry out at least perspective, orthographic and oblique drawing. In a preferred embodiment, specific provision is also made for special forms of oblique projection, i.e. cabinet and cavalier projection.

According to a preferred embodiment of the invention, the elongate support comprises a triangular cross-section tube which has holes and slots at spaced intervals along its apex. Preferably, the triangular cross-section tube can be formed from a flat sheet of material pre-cut with the necessary slots and holes and arranged to be folded into tubular form.

A more detailed description of the drawing aid in accordance with the invention will now be given by way of example and with reference to the accompanying drawings, in which:

Fig. 1 shows a first embodiment of drawing aid in accordance with the invention; and,

Fig. 2 is a plan view of an alternative form of base for the drawing aid.

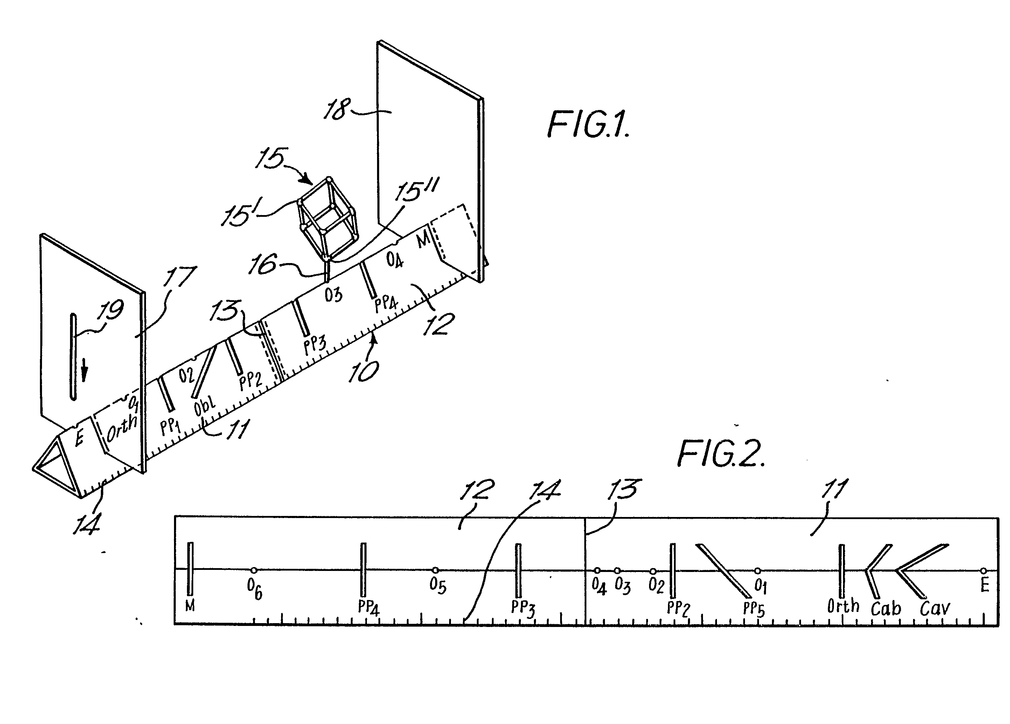

Referring first to Fig. 1, it will be seen that the drawing aid which is here assembled from a kit of parts comprises a base or rack, indicated generally at 10. The rack 10 is here shown as consisting of two stiff cardboard sheets 11 and 12, scored and folded so that they form two triangular cross-section tubes which can be placed end to end and secured, for example by means of adhesive tape, around the central joint 13. In a preferred arrangement, the base is approximately 600 mm long. Alternatively of course, the base can be made in one piece, or in a greater number of pieces. The base or rack 10 is provided with a number of holes and slots, the purpose of which will be described hereinafter. The slots and holes are formed along the apex of the tube. In the case where the rack is formed from cardboard sheets, then the cardboard is preferably pre-cut with the necessary slots and holes and is also pre-printed with the necessary numbers and letters to identify the slots and holes. Alternatively, if the rack is a solid elongate bar, then the slots and holes would be drilled and cut into the solid. Similarly, if the rack has a cross-sectional shape which is other than triangular, then the necessary slots and holes would be provided in or along the appropriate sides and/or edges of the rack. The rack can also conveniently be printed or marked with a linear measuring scale 14.

The several holes $O_1$, $O_2$, $O_3$, $O_4$ which are spaced at intervals along the rack 10 are for the mounting of an object 15 which is to be drawn using the drawing aid. The object 15 is here shown as a cuboid, formed as an open framework of rods. This cuboid 15 is supported on a flexible wire 16 so that the object can be formed for example from plastics tubes cut to an appropriate length and joined at the corners by plastics three-way connector pieces 15'. At the bottom corner of the object 15 is a four-way connector piece 15" by means of which the cuboid is attached to the wire 16. Alternatively, and preferably, the support wire 16 is rigid, not flexible, and a suitable universal joint (not shown) is provided to connect the wire 16 to the object 15 so that it can be orientated in different attitudes.

A flat sheet 17 which defines a picture plane or projection plane is provided in the form of a sheet of rigid transparent material, preferably a plastics material. The user of the drawing aid can draw on this sheet 17, for example with a "chinagraph" pencil. A number of slots are provided in the rack 10 for the projection sheet 17, as will be described later.

Also mountable on the rack 10 is a reflector 18. This is preferably a mirror made for example from a sheet of self-adhesive reflecting material supported on a cardboard sheet. Any reflecting material can be used for the reflector, provided that it has a plane surface and will produce images without substantial distortion. Naturally, a conventional glass mirror could be used, although this is less attractive in a kit-form drawing aid which is designed to be sent through the post. The reflector 18 is designed to be mounted in a slot M adjacent to one end of the rack, as indicated.

As mentioned above, the drawing aid can be used to teach the principles of geometrical projection which form the basis of various types of drawing. The drawing aid of the present invention is particularly versatile in this respect because the range of possibilities is determined merely by the provision of appropriate holes and slots in the supporting rack. The rack shown in Fig. 1 is appropriate for perspective, orthographic and oblique drawings, although a simplified form of rack could be limited to a more restricted range of possibilities if desired.

The method of using the drawing aid of Fig. 1 for different types of projection will now be described. For perspective drawing the viewpoint is designated by the top of a vertical rod 19 which is designed to be pushed into a hole E adjacent to one end of the rack. The reflector 18 is not used for perspective drawing. The object 15 is supported by the rack at one of the object holes $O_1$, $O_2$, $O_3$ or $O_4$. The user places one eye at the viewpoint which the rod top provides, and draws on the surface of the picture plane sheet 17 the view of the object 15 which is seen. By altering the spatial attitude of the object 15 one can obtain one-, two- and three-point perspectives. The picture plane sheet 17 can be positioned in any of four slots $PP_1$, $PP_2$, $PP_3$, $PP_4$ spaced along the length of the rack, in each of which the picture plane sheet 17 is set at right-angles to the longitudinal axis of the rack 10.

For orthographic drawing, the reflector 18 is placed in its slot M on the opposite side of the object 15 from the sheet 17 defining the picture plane. The viewpoint rod 19 at E is here discarded. The picture plane sheet 17 is now mounted in the slot marked Orth, parallel to the reflector 18. The user then aligns each corner-point of the object 15, e.g. the cuboid, with its own reflection and with the reflection of the pupil of his own eye, and marks its projected image on the picture plane sheet 17. Dimetric, trimetric and isometric views can be drawn in this way.

For oblique drawingl the general set-up and method of use is the same as for orthographic projection, except that the picture plane sheet 17 is now mounted in an angled slot Obl so that the picture plane is set at an oblique angle to the reflector 18 instead of being set parallel to it.

The supporting rack shown in Fig. 2 is basically similar to that shown in Fig. 1, although it offers additional possibilities. Six possible object holes $O_1$ to $O_6$ are provided in this rack. In addition to having three transverse slots $PP_2$, $PP_3$ and $PP_4$ for the projection plane sheet 17 for perspective drawing, this rack also includes a further slot $PP_5$ which is set at an angle and which can be used for drawing perspectives when the object is off the axis of vision.

In this embodiment of rack, greater provision is made for making oblique drawings. Two slots Cab and Cav are provided for making cabinet and cavalier projections respectively, each of these projections being special cases of oblique projection. These slots Cab and Cav are cut so that the picture plane sheet 17 is tilted forward towards the mirror and is also set askew with reference to a transverse plane at right-angles to the longitudinal axis of the rack.

It will therefore be appreciated that the drawing aid of the present invention is extremely versatile in the range of geometrical projections which can be demonstrated with it, and that it is also capable of construction in kit form for low cost and for ease of packing, storage and transportation.

**Claims**

1. A drawing aid comprising an elongate support (10), an object (15), a projection of which is to be drawn, arranged to be mounted on the support (10), a transparent drawing plate (17), on which a user can draw, which defines a picture plane and is also arranged to be mounted on the support (10), characterised in that a reflector (18) is provided which is mountable on the support (10), and in that the support (10) comprises a linear rack provided with a plurality of receiving apertures ($O_1 \ldots O_6$; $PP_1 \ldots PP_5$, Orth, Cab, Cav; M) to receive the object (15), the drawing plate (17) and the reflector (18), alternative apertures being provided for at least said object (15) and said drawing plate (17), and said apertures each being predetermined in respect of their position along the longitudinal axis of the rack and in respect of the orientation relative to said axis which said drawing plate (17) will adopt when mounted in one of its said receiving apertures (PP$_1$ ... PP$_5$, Orth, Cab, Cav).

2. A drawing aid as claimed in claim 1, characterised in that the rack (10) also includes a receiving aperture (E) for a sighting element (19).

3. A drawing aid as claimed in claim 1 or 2, characterised in that the reflector (18) is a sheet-form element mounted at right-angles to the longitudinal axis of the rack (10).

4. A drawing aid as claimed in any preceding claim, characterised in that the receiving apertures in the rack include slots and holes to support the mounted elements (15, 17, 18).

5. A drawing aid as claimed in any preceding claim, characterised in that the support (10) comprises a triangular cross-section tube.

6. A drawing aid as claimed in claim 5, characterised in that the tube is made from one or more sheets of material pre-cut with slots and holes for the mounted elements (15, 17, 18) and folded into tubular form.

7. A drawing aid as claimed in any preceding claim, characterised in that the support (10) enables the drawing plate (17) to be positioned in any of a plurality of receiving apertures (PP$_1$ ... PP$_5$) each set at right-angles to the longitudinal axis of the support to enable perspective drawing to be effected.

8. A drawing aid as claimed in any preceding claim, characterised in that the support (10) enables the drawing plate (17) to be positioned in an aperture or in one of a plurality of apertures inclined at an angle to the longitudinal axis of the support to enable oblique drawing to be effected.

9. A drawing aid as claimed in claim 8, characterised in that at least one receiving aperture (Cab, Cav) is provided for the drawing plate (17) which is tilted towards the reflector (18) and is set askew with reference to a transverse plane at right-angles to the longitudinal axis of the support (10).

10. A drawing aid as claimed in any preceding claim, characterised in that the object (15) to be drawn is a hollow cuboid formed from an open framework of rods mounted (15', 15") so that it can be oriented in different attitudes.

**Revendications**

1. Appareil d'aide au dessin comprenant un support allongé (10), un objet (15), dont une projection doit être tracée, conçu pour être monté sur le support (10), une plaque à tracer transparente (17), sur laquelle un utilisateur peut dessiner, qui définit un plan image et qui est également conçue pour être montée sur le support (10), caractérisé en ce qu'il est prévu un réflecteur (18) pouvant être monté sur le support (10), et en ce que le support (10) comprend une règle linéaire présentant plusieurs ouvertures de réception (O$_1$ ... O$_6$; PP$_1$ ... PP$_5$,

Orth, Cab, Cav; M) destinées à recevoir l'objet (15), la plaque à tracer (17) et le réflecteur (18), d'autres ouvertures étant prévues pour au moins ledit objet (15) et ladite plaque à tracer (17), et lesdites ouvertures étant chacune prédéterminées en ce qui concerne leur position le long de l'axe longitudinal de la règle et en ce qui concerne l'orientation, par rapport audit axe, que ladite plaque à tracer (17) prend lorsqu'elle est montée dans l'une desdites ouvertures de réception (PP$_1$ ... PP$_5$, Orth, Cab, Cav).

2. Appareil d'aide au dessin selon la revendication 1, caractérisé en ce que la règle (10) présente également une ouverture (E) de réception d'un élément de visée (19).

3. Appareil d'aide au dessin selon la revendication 1 ou 2, caractérisé en ce que le réflecteur (18) est un élément en forme de plaque monté perpendiculairement à l'axe longitudinal de la règle (10).

4. Appareil d'aide au dessin selon l'une quelconque des revendications précédentes, caractérisé en ce que les ouvertures de réception de la règle comprennent des fentes et des trous destinés à supporter les éléments montés (15, 17, 18).

5. Appareil d'aide au dessin selon l'une quelconque des revendications précédentes, caractérisé en ce que le support (10) comprend un tube de section triangulaire.

6. Appareil d'aide au dessin selon la revendication 5, caractérisé en ce que le tube est constitué d'une ou plusieurs plaques de matière, préalablement découpées de façon à présenter des fentes et des trous pour les éléments montés (15, 17, 18) et pliées en une forme tubulaire.

7. Appareil d'aide au dessin selon l'une quelconque des revendications précédentes, caractérisé en ce que le support (10) permet à la plaque à tracer (17) d'être placée dans l'une quelconque de plusieurs ouvertures de réception (PP$_1$ ... PP$_5$) orientées. chacune perpendiculairement à l'axe longitudinal du support pour permettre d'effectuer un dessin en perspective.

8. Appareil d'aide au dessin selon l'une quelconque des revendications précédentes, caractérisé en que le support (10) permet à la plaque à tracer (17) d'être positionnée dans une ouverture ou dans l'une de plusieurs ouvertures inclinées dans un certain angle par rapport à l'axe longitudinal du support pour permettre d'effectuer un dessin oblique.

9. Appareil d'aide au dessin selon la revendication 8, caractérisé en ce qu'au moins l'une des ouvertures de réception (Cab, Cav) est prévue pour la plaque à tracer (17) qui est inclinée vers le réflecteur (18) et est orientée en biais par rapport à un plan transversal perpendiculaire à l'axe longitudinal du support (10).

10. Appareil d'aide au dessin selon l'une quelconque des revendications précédentes, caractérisé en ce que l'objet (15) à dessiner est un cuboïde creux formé d'une ossature ouverte de barreaux montés (15', 15″) de façon à pouvoir être orienté dans différentes attitudes.

**Patentansprüche**

1. Zeichenhilfe mit einer länglichen Stütze (10), einem an der Stütze (10) angebrachten Objekt (15), von dem eine Projektion zu zeichnen ist, mit einer transparenten Zeichenplatte (17), auf der ein Benutzer zeichnen kann, die eine Bildebene definiert und ebenso auf der Stütze (10) angeordnet ist, dadurch gekennzeichnet, daß ein Reflektor (18) vorgesehen ist, welcher ebenfalls an der Stütze (10) anbringbar ist, und daß die Stütze (10) eine Stange umfaßt, die mit einer Vielzahl von Aufnahmeöffnungen ($O_1 \ldots O_6$; $PP_1 \ldots PP_5$, Orth, Cab, Cav; M) versehen ist, um das Objekt (15), die Zeichenplatte (17) und den Reflektor (18) aufzunehmen, wobei alternative Öffnungen für zumindest das Objekt (15) und die Zeichenplatte (17) vorgesehen sind, welche Öffnungen jeweils hinsichtlich ihrer Lage entlang der Längsachse der Stange und hinsichtlich der Ausrichtung relativ zur Achse vorbestimmt sind, welche die Zeichenplatte (17) annimmt, wenn sie in einer der Aufnahmeöffnungen ($PP_1 \ldots PP_5$, Orth, Cab, Cav) befestigt ist.

2. Zeichenhilfe nach Anspruch 1, dadurch gekennzeichnet, daß die Stange (10) ebenso eine Aufnahmeöffnung (E) für ein Visierelement (19) umfaßt.

3. Zeichenhilfe nach Anspruch 1 oder 2, dadurch gekennzeichnet, daß der Reflektor (18) ein blattförmiges Element ist, welches im rechten Winkel zur Längsachse der Stange (10) angebracht ist.

4. Zeichenhilfe nach einem der vorhergehenden Ansprüche, dadurch gekennzeichnet, daß die Aufnahmeöffnungen in der Stange Schlitze und Löcher umfassen, um die befestigten Elemente (15, 17, 18) abzustützen.

5. Zeichenhilfe nach einem der vorhergehenden Ansprüche, dadurch gekennzeichnet, daß die Stütze (10) ein Rohr mit einem dreieckigen Querschnitt ist.

6. Zeichenhilfe nach Anspruch 5, dadurch gekennzeichnet, daß das Rohr aus einem oder mehreren mit vorbeschnittenen Schlitzen und Löchern für die zu befestigenden Elemente (15, 17, 18) versehenen Materialplatten besteht, die in eine Rohrform gefaltet sind.

7. Zeichenhilfe nach einem der vorhergehenden Ansprüche, dadurch gekennzeichnet, daß die Stütze (10) eine Positionierung der Zeichenplatte (17) in einer von einer Vielzahl von Aufnahmeöffnungen ($PP_1 \ldots PP_5$ ermöglicht, und zwar jeweils eingestellt im rechten Winkel zur Längsachse der Stütze, um die vorzunehmende perspektivische Zeichnung zu ermöglichen.

8. Zeichenhilfe nach einem der vorhergehenden Ansprüche, dadurch gekennzeichnet, daß die Stütze (10) eine Positionierung der Zeichenplatte (17) in einer Öffnung oder in einer der Vielzahl von Öffnungen erlaubt, die in einem Winkel zur Längsachse der Stütze geneigt sind, um ein zu bewirkendes schräges Zeichnen zu ermöglichen.

9. Zeichenhilfe nach Anspruch 8, dadurch gekennzeichnet, daß zumindest eine Aufnahmeöffnung (Cap, Cav) für die Zeichenplatte (17) vorgesehen ist, die in Richtung auf den Reflektor (18) gekippt und bezüglich einer Querebene in rechten Winkeln zur Längsachse der Stütze (10) schief eingestellt ist.

10. Zeichenhilfe nach einem der vorhergehenden Ansprüche, dadurch gekennzeichnet, daß das zu zeichnende Objekt (15) eine hohle, kubische Form eines offenen Rahmenwerks von miteinander verbundenen Stangen (15', 15″) ist, so daß es in verschiedenen Haltungen ausgerichtet werden kann.

FIG1.

FIG2.